# EUROPÄISCHE PATENTSCHRIFT

(11) **EP 0 451 375 B1**
(45) Veröffentlichungstag und Bekanntmachung des Hinweises auf die Patenterteilung: **02.08.1995**
(21) Anmeldenummer: 90250333.3
(22) Anmeldetag: 21.12.1990
(51) Int. Cl.: G01N 29/24, B06B 1/04

(54) **Elektrodynamischer Ultraschallwandler**
Electrodynamic ultrasound-transducer
Transduceur électrodynamique pour ultrasons

(30) Priorität: 06.04.1990 DE 4011686
(43) Veröffentlichungstag der Anmeldung: 16.10.1991
(73) Patentinhaber: MANNESMANN Aktiengesellschaft, 40027 Düsseldorf (DE)
(72) Erfinder: Graff, Alfred, Dipl.-Phys., W-4300 Essen 16 (DE); Wächter, Michael, Dr. rer. nat., W-4030 Ratingen 8 (DE)
(74) Vertreter: Meissner, Peter E., Dipl.-Ing.

(56) Entgegenhaltungen:
- DE-A- 2 944 819
- DE-A- 3 904 440
- GB-A- 2 113 392
- US-A- 4 395 913
- PATENT ABSTRACTS OF JAPAN vol. 10, no. 247 (P-490)(2303) 26 August 1986, & JP-A-61 075259

## Beschreibung

Die Erfindung bezieht sich auf einen elektrodynamischen Ultraschallwandler, zur Prüfung elektrisch leitender Werkstücke, mit einem aus Permanentmagnetelementen und einem Magnetfeldlinien sammelnden Konzentratorkörper bestehenden Magnetsystem und mindestens einer Wandlerspule, gemäß dem Oberbegriff des Patentanspruches 1.

Der Einsatz von Seltenerd-Permanentmagneten zur Erzeugung hoher Luftspaltinduktionen ist weitverbreitet. Ein bekanntes Material für Permanentmagnete ist beispielsweise eine Verbindung von Kobalt und Samarium (Co₅Sm) (J.J. Becker in Journal of applied physics 41, 1055 (1970)). Die in solchen Kobalt-Samarium Einkristallen entstehenden hohen Anisotropie-Energien werden durch die Wechselwirkung der freien Elektronen mit lokalen magnetischen Atommomenten bewirkt. Die Verwendung solcher Materialien für Permanentmagnete im Anwendungsbereich der elektrodynamischen Ultraschallerzeugung sind an sich bekannt ("Ultrasonics" 1984, Vol. 26, January). Aus dieser Veröffentlichung ist ebenfalls bekannt, bei Permanentmagneten die Polflächen gleicher Polarität einander zuzuwenden und die Magnetfeldlinien in einem Magnetfeldkonzentrator zu sammeln und über eine entsprechende Ausbuchtung austreten zu lassen. In dieser Veröffentlichung besteht die Magnetanordnung aus einem segmentierten ringförmigen radial aufmagnetisierten Permanentmagnetsystem. Der Magnetfeldkonzentrator ist dabei innenliegend angeordnet und besitzt eine der Probenoberfläche zugewandte Ausbuchtung. Für den Fall, daß bei einer solchen Anordnung magnetisierbare bzw. ferromagnetische Stähle geprüft werden, ist der Austritt der Magnetfeldlinien fast ausschließlich aus der der Probe zugewandten Ausbuchtung naturgemäß durch die Rückschlußfähigkeit des ferromagnetischen Prüfkörpers gegeben. Für den Fall, daß der Zu prüfende Körper aus einem unmagnetischen Material besteht, welches nur geringe oder vernachlässigbare Rückschlußfähigkeit besitzt, treten die Magnetfeldlinien nicht mehr bevorzugt aus der dem zu prüfenden Werkstück zugewandten Ausbuchtung des Konzentrators aus, sondern sie treten auch in entgegengesetzter Richtung aus, wodurch sich das in die Oberfläche des zu Prüfenden Werkstückes eindringende Magnetfeld um den nach oben austretenden Betrag schwächt. Bei der Anwendung der elektrodynamischen Ultraschallprüfung für beispielsweise austenitische Stähle, können mit solchen bekannten Permanentmagnetanordnungen nicht mehr genügend hohe Magnetfeldstärken in die Oberfläche des Prüfkörpers eingebracht werden. Hierdurch reduziert sich die erzeugte Ultraschallamplitude auf ein so geringes Maß, daß eine effiziente Ultraschallprüfung nicht mehr möglich ist.

Die Anordnung von mit gleichen Polaritäten einander zugewandten Magneten ist auch aus der deutschen Offenlegungsschrift DE-OS 32 34 424 bekannt. Auch hierbei ergibt sich der Nachteil, daß im Fall der Prüfung weitgehendst unmagnetischer Werkstücke, die Feldlinien teilweise an der der Werkstückoberfläche abgewandten Seite austreten und somit das in die Werkstückoberfläche eindringende Magnetfeld stark reduzieren.

Ein weiterer Nachteil bei dieser bekannten Anordnung liegt in der Verwendung von Ferritteilen als zwischen den Polflächen gleicher Polarität angebrachten Magnetfeldkonzentratoren. Der Nachteil ergibt sich daraus, daß die jeweils zwischen Ferritteil und Probenoberfläche angeordnete Wandlerspule Hochfrequenz-Sendeimpulse und damit Ultraschall auch in dem Ferritteil erzeugt. Daraus ergibt sich, daß nur ein Teil der in die Wandlerspule eingebrachten elektrischen Energie zur Erzeugung von Ultraschall in dem Werkstück genutzt werden kann. Die in den Ferritteilen erzeugte Ultraschallenergie geht der Ultraschallprüfung nicht nur verloren, sondern kann über Rückkopplungs- oder Überlagerungseffekte sogar die Ultraschallprüfung selbst erheblich stören. Ein solcher Einfluß liegt unter anderem ursächlich in der üblicherweise magnetostriktiven Eigenschaft von Ferriten. Außerdem liegt die Sättigungsinduktion solcher Ferrite im Bereich von nur bis zu 0,5 Tesla.

Aufgabe der Erfindung ist es daher, bei einem elektrodynamischen Ultraschallwandler mit Permanentmagnetsystem die Luftspaltinduktionen derart zu erhöhen, daß für die Ultraschallprüfung geeignete Schallamplituden selbst bei unmagnetischen zu prüfenden elektrisch leitfähigen Werkstoffen ermöglicht werden.

Diese Aufgabe wird bei einem elektrodynamischen Ultraschallwandler der gattungsgemäßen Art erfindungsgemäß mit den im Kennzeichen des Hauptanspruches angegebenen Merkmalen gelöst. Weitere vorteilhafte Ausgestaltungen sind in den Unteransprüchen dargestellt.

Der Vorteil der Erfindung liegt darin, daß der größtmögliche Teil der eingebrachten elektrischen Energie genutzt und der weitgehendste Teil des zur Verfügung stehenden Magnetfeldes und der somit erzeugbaren Ultraschallenergie auf die Oberfläche bzw. auf den Prüfort konzentriert wird.

Die Erzeugung von Ultraschall im Schallwandler selbst wird durch die Verwendung des weichmagnetischen Pulververbundwerkstoffes als Konzentratorkörper verhindert. Ein solcher Pulververbundwerkstoff hat die Eigenschaft, elektrisch nicht leitend aber magnetisch leitend zu sein. Dies ergibt sich aus der Tatsache, daß ferromagnetische mikrokristalline Körnchen in einem elektrisch nicht leitenden Material eingebettet sind, so daß jedes Körnchen für sich keine elektrische Verbindung zum nächstliegenden Körnchen besitzt. Somit ist es unmöglich, eine durchweg elektrisch leitende Verbindung in einem solchen Material herzustellen. Induzierte Wirbelströme werden weggedämpft, wodurch die Ultraschallanregung im Konzentrator selbst vermieden wird, aber die Leitfähigkeit bezüglich der Magnetfeldlinien erhalten bleibt.

Ein solcher Pulververbundwerkstoff ist unter der Firmenbezeichnung Corovac bekannt (Fa. Vacuumschmelze). Gegenüber Ferriten liegt die Sättigungsinduktion dieses Werkstoffes im Bereich von etwa 2 Tesla. Außerdem ist Corovac nicht magnetostriktiv.

Besonders vorteilhafte Ausgestaltungen der Erfindung sind in den Zeichnungen dargestellt.

Es zeigen:
- Figur 1: Permanentmagnetanordnung mit Stabmagneten
- Figur 2: Permamentmagnetanordnung mit Permanentmagneten und Rückschlußkörper
- Figur 3: Permanentmagnetanordnung mit radial aufmagnetisiertem Permanentmagnetring
- Figur 4: Verschiedene Permanentmagnetanordnungen bei Verwendung prismatischer Konzentratorkörper

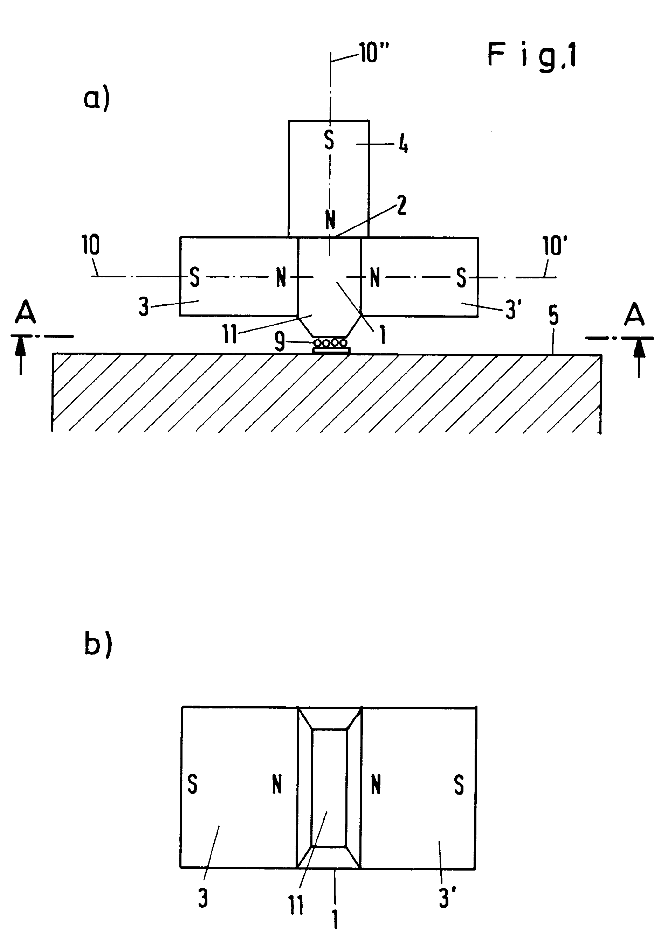

Figur 1a) (Draufsicht 1b) zeigt eine Permanentmagnetanordnung mit Stabmagneten, bei der der Rückschluß der Magnetfeldlinien über das Werkstück und über Luft erfolgt. Die senkrecht zur Oberfläche stehende gedachte Achse erstreckt sich zentrisch in Längsrichtung des Konzentratorkörpers 1. Hierbei sind zwei Permanentmagnetelemente 3, 3′ sich direkt gegenüberliegend angeordnet, und das zusätzliche Permanentmagnetelement 4 ist an der der Abstrahlungsfläche gegenüberliegenden Fläche 2 des Konzentratorkörpers 1 anliegend angeordnet. Die Permanentmagnetelemente 3, 3′, 4 sind so ausgerichtet, daß die Polflächen gleicher Polarität gemeinsam auf den Konzentratorkörper 1 gerichtet sind. Das zusätzliche Permanentmagnetelement 4 verhindert einen dem Werkstück abgewandten Feldlinienaustritt. Die angedeuteten Feldlinien konzentrieren sich somit auf die am Konzentratorkörper 1 angebrachte Ausbuchtung 11, die an der Werkstückoberfläche 5 mittelbar, d.h. über die Wandlerspule 9 anliegt.

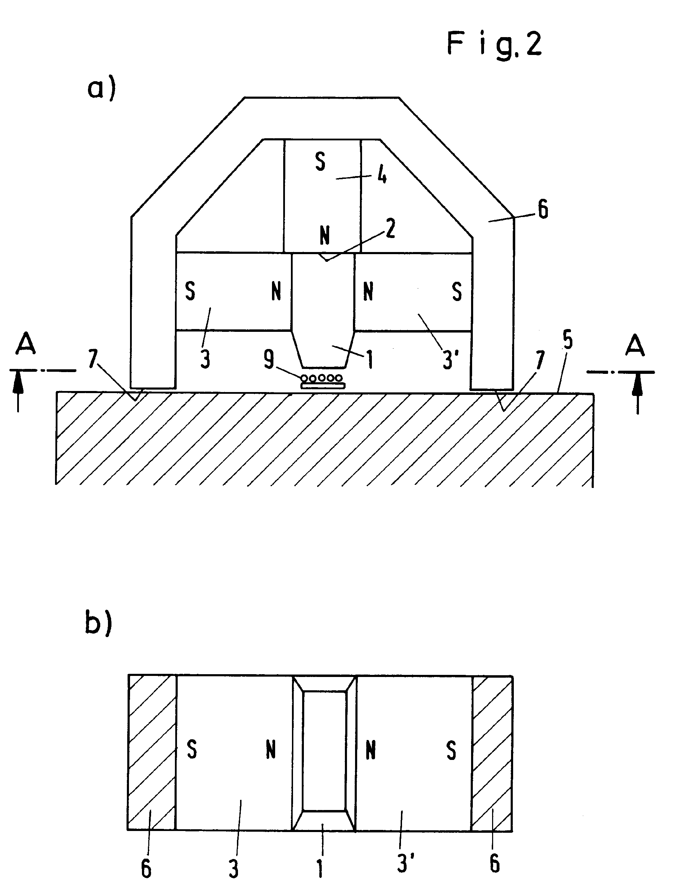

Figur 2a) (Draufsicht 2b) zeigt unter Verwendung einer wie in Figur 1 dargestellten Permanentmagnetanordnung eine Ausgestaltungsmöglichkeit, bei der die dem Konzentratorkörper abgewandten Polflächen über einen gemeinsamen Rückschlußkörper miteinander verbunden sind. Der Rückschlußkörper 6 ist mit zwei Polschuhen 7 versehen, die ebenfalls an der Werkstückoberfläche 5 anliegen und somit den magnetischen Rückschluß bilden.

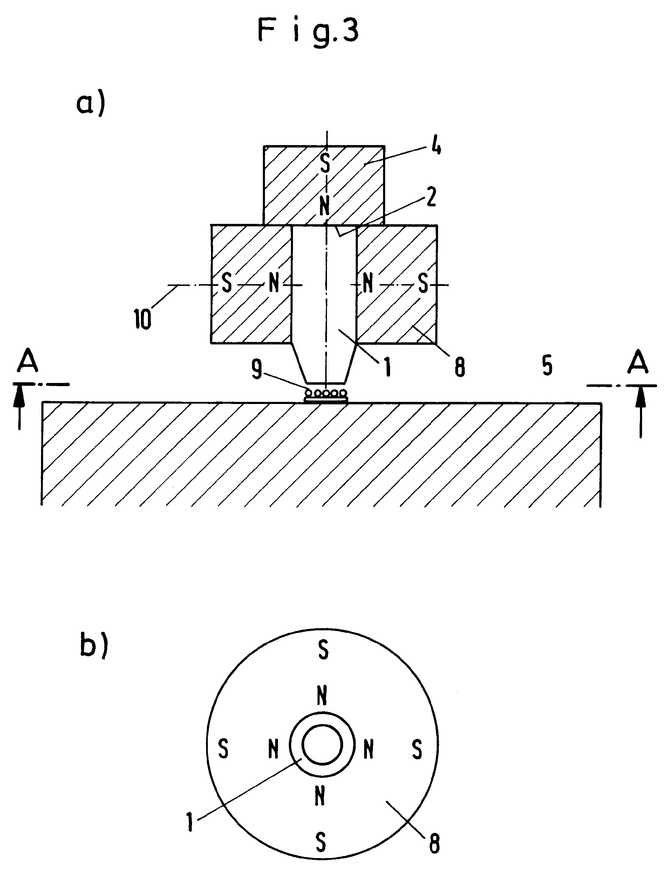

Figur 3a)(Draufsicht 3b) zeigt ein Permanentmagnetsystem bestehend aus einem segmentierten radial aufmagnetisierten Permanentmagnetring 8, bei dem die Polflächen der einzelnen Permanentmagnetelemente aneinandergesetzt eine Zylindermantelfläche bilden, so daß zur Realisierung einer flächigen Berührung mit dem Konzentratorkörper der Konzentratorkörper 1 selbst als Vollzylinder ausgestaltet ist. Durch die radiale Aufmagnetisierung eines solchen Permanentmagnetringes weisen alle Permanentmagnetelemente mit den Polflächen gleicher Polarität zum Konzentrator. Das zusätzliche Permanentmagnetelement 4 ist als "Deckel" ausgestaltet, der mit der Polfläche der gleichen Polarität wie alle übrigen Permanentmagnetelemente am Konzentratorkörper anliegt.

Auch das in Figur 3 dargestellte Magnetsystem kann analog zu Figur 2 mit einem weichmagnetischen Rückschluß, z.b. in Form eines zylindrischen Topfes versehen werden.

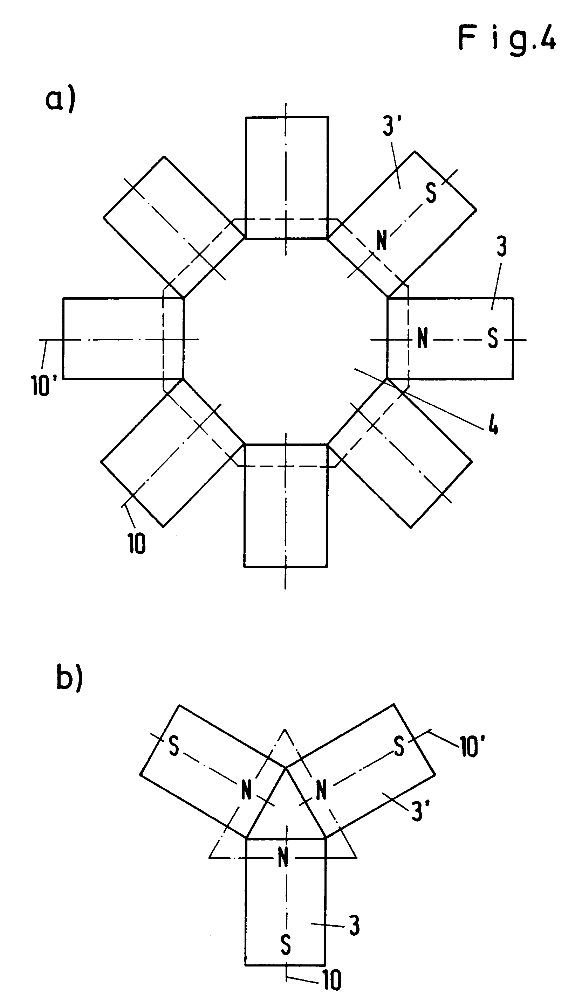

Figur 4 zeigt verschiedene Permanentmagnetanordnungen mit prismatischen Konzentratorkörpern in Draufsicht. In Teilbild a ist bei der Verwendung eines Konzentratorkörpers mit achteckiger Grundfläche an jeder Seitenfläche ganzflächig abdeckend ein Permanentmagnetelement 3, 3′ angeordnet. Die gedachte Achse verläuft hierbei zentrisch innerhalb des Konzentratorkörpers 1, wobei alle Polachsen 10, 10′,.... der Permanentmagnetelemente 3, 3′,.... diese Achse konfokal schneiden. Es wäre weiterhin denkbar, daß die Permanentmagnetelemente 3, 3′,.... mit ihren Polachsen 10, 10′,.... nicht unbedingt nur parallel zur Werkstückoberfläche 5 ausgerichtet sind, sondern durchaus auch in Schrägstellung angeordnet werden können. Das an der bezüglich der Werkstückoberfläche 5 abgewandten Fläche 2 des Konzentratorkörpers angebrachte zusätzliche Permanentmagnetelement 4 kann hierbei entweder die Grundflächenkontur des Konzentratorkörpers nachzeichnend ausgebildet sein, oder über die Grundflächenkontur hinaus kreisförmig begrenzt sein. Dabei muß jedoch immer gewährleistet sein, daß die anliegende Polfläche des zusätzlichen Permanentmagnetelementes 4 gleich oder größer als die entsprechende Konzentratorfläche 2 ausgebildet ist, so daß ein Feldlinienaustritt aus der der Werkstückoberfläche abgewandten Fläche 2 des Konzentratorkörpers verhindert werden kann. In Teilbild b ist eine Permanentmagnetanordnung mit einem prismatischen Konzentratorkörper mit dreieckiger Grundfläche dargestellt. Auch hierbei ist bei der Verwendung eines zusätzlichen Permanentmagnetelementes 4 als "Deckel" der ausschließliche Feldlinienaustritt an der der Werkstückoberfläche zugewandten Fläche des Konzentratorkörpers gewährleistet. Diese in Figur 4 dargestellten Anordnungen können jeweils mit einem Rückschlußkörper verbunden werden, der mit allen dem Konzentrator abgewandten Polflächen in magnetisch leitender Verbindung steht.

Eine weitere Ausgestaltungsmöglichkeit ist eine Permanentmagnetanordnung, die aus einer segmentierten Halbkugel besteht, die in der Mitte liegend einen ebenfalls halbkugelförmigen Konzentratorkörper enthält.

Bei allen dargestellten Permanentmagnetanordnungen ist es möglich, durch eine Aneinanderreihung von einer Vielzahl solcher Permanentmagnetanordnungen ein Prüflineal zu erhalten.

## Patentansprüche

1. Elektrodynamischer Ultraschallwandler zur Prüfung elektrisch leitender Werkstücke mit einem aus Permanentmagnetelementen und einen Magnetfeldlinien sammelnden Konzentratorkörper bestehenden Magnetsystem und mindestens einer Wandlerspule, wobei die Permanentmagnetelemente mit den Polflächen gleicher Polarität einander zugewandt am Konzentratorkörper flächig, magnetisch leitend anliegen, und die Wandlerspule an der Abstrahlungsfläche des Konzentratorkörpers angeordnet ist,
dadurch gekennzeichnet,
daß der Konzentratorkörper (1) prismatisch oder zylindrisch ausgestaltet ist und aus einem an sich bekannten weichmagnetischen Pulververbundwerkstoff mit geringer elektrischer Leitfähigkeit besteht, daß die Permanentmagnetelemente (3, 3′, ....) mit ihren Polachsen (10, 10′, ....) auf eine senkrecht zur Abstrahlungsfläche und innerhalb des Konzentratorkörpers (1) liegende gedachte Achse gerichtet sind, und daß an der der Abstrahlungsfläche gegenüberliegenden Fläche (2) des Konzentratorkörpers (1) ein weiteres Permanentmagnetelement (4) mit der Polfläche der ebenfalls gleichen Polarität ganzflächig anliegt, wobei die Polfläche gleich oder größer als die Konzentratorfläche (2) ist.

2. Elektrodynamischer Ultraschallwandler nach Anspruch 1,
dadurch gekennzeichnet,
daß das Magnetsystem aus mindestens drei Permanentmagnetelementen (3..., 4) besteht.

3. Elektrodynamischer Ultraschallwandler nach Anspruch 1,
dadurch gekennzeichnet,
daß das Magnetsystem aus einem segmentierten radial aufmagnetisierten Permanentmagnetring (8) mit innenliegendem ganzflächig anliegenden Konzentratorkörper (1) besteht.

4. Elektrodynamischer Ultraschallwandler nach den Ansprüchen 1 bis 3,
dadurch gekennzeichnet,
daß die dem Konzentrator (1) abgewandten Polflächen der Permanentmagnetelemente (3,....,4) magnetisch leitend mit einem gemeinsamen Rückschlußblech (6) verbunden sind, wobei das Rückschlußblech (6) mit mindestens einem an der zu prüfenden Werkstückoberfläche (5) anliegenden Polschuh (7) versehen ist.

5. Elektrodynamischer Ultraschallwandler nach einem oder mehreren der vorhergehenden Ansprüche,
dadurch gekennzeichnet,
daß eine Mehrzahl von Magnetsystemen linear aneiandergereiht und zu einem Prüflineal zusammengesetzt sind.

## Claims

1. Electrodynamic ultrasonic transformer, for testing electrically conductive workpieces, with a magnet system, comprising permanently magnetic elements and a concentrating body which collects lines of a magnetic field, and at least one transformer coil, whereby permanently magnetic elements with pole faces having equal polarity lie, magnetically conductively, facing each other, flat on a concentrating body, and a transformer coil is disposed on a radiating surface of a concentrating body,
wherein
a concentrating body (1) is designed prism-shaped or cylindrical and is made of a lightly magnetic powder cement showing slight electrical conductivity, and permanently magnetic elements (3, 3′....) with their pole axes (10, 10′....) are aligned on an imaginary axis running vertically in relation to a radiating surface and lying inside a concentrating body (1), and a further permanently magnetic element (4), with a pole likewise with identical polarity, lies with its whole surface on a surface (2), of a concentrating body (1), which is opposite a radiating surface concerned is as large as or larger than a surface of a concentrator (2).

2. Electrodynamic ultrasonic transformer in accordance with claim 1,
wherein
a magnet system comprises at least three permanently magnetic elements (3..., 4).

3. Electrodynamic ultrasonic transformer in accordance with claim 1,
wherein
a magnet system comprises a segmented, radially magnetized, permanently magnetic ring (8) with an inner concentrating body (1) which lies with its whole surface on a said ring.

4. Electrodynamic ultrasonic transformer in accordance with claims 1 to 3,
wherein
pole faces, of permanently magnetic elements (3,....,4), which face away from a concentrator (1), are magnetically, conductively connected to a common ground plate (6), whereby a said ground plate (6) is provided with at least one pole piece (7) which lies on a surface of a workpiece to be tested.

5. Electrodynamic ultrasonic transformer in accordance with any one or several of foregoing claims,
wherein
a number of magnet systems are set in a line forming a linear line of testing.

## Revendications

1. Transducteur électrodynamique à ultrasons pour tester des pièces électriquement conductrices, comportant un système magnétique constitué d'éléments d'aimant permanent et d'un corps de concentrateur rassemblant les lignes de champ magnétique, et au moins une bobine de transducteur, les éléments d'aimant permanent avec les surfaces polaires de même polarité en regard l'une de l'autre étant adjacents au corps de concentrateur en surface, de façon magnétiquement conductrice, et la bobine du transducteur étant agencée sur la surface de rayonnement du corps de concentrateur,
caractérisé en ce que le corps de concentrateur (1) est réalisé de façon prismatique ou cylindrique et est constitué d'une matière composite en poudre, magnétique douce, connue en soi, ayant une faible conductibilité électrique, en ce que les éléments d'aimant permanent (3,3′,...) avec leurs axes polaires (10,10′,...) sont orientés selon un axe imaginaire s'étendant perpendiculairement à la surface de rayonnement et à l'intérieur du corps de concentrateur (1), et en ce que, à la surface (2), opposée à la surface de rayonnement, du corps de concentrateur (1), est adjacent un autre élément d'aimant permanent (4), sur toute la surface, avec la surface polaire d'également la même polarité, la surface polaire étant identique ou plus grande que la surface du concentrateur (2).

2. Transducteur électrodynamique à ultrasons selon la revendication 1,
caractérisé en ce que le système magnétique est constitué d'au moins trois éléments d'aimant permanent (3,...,4).

3. Transducteur électrodynamique à ultrasons selon la revendication 1,
caractérisé en ce que le système magnétique est constitué d'un aimant permanent annulaire (8), segmenté, radialement magnétisé comportant un corps de concentrateur (1) intérieur adjacent sur toute sa surface.

4. Transducteur électrodynamique à ultrasons selon les revendications 1 à 3,
caractérisé en ce que les surfaces polaires, opposées au concentrateur (1), des éléments d'aimant permanent (3,...,4) sont reliées de façon magnétiquement conductrice à une tôle de fermeture arrière commune (6), la tôle de fermeture arrière (6) étant munie d'au moins une pièce polaire (7) adjacente à la surface de la pièce à tester (5).

5. Transducteur électrodynamique à ultrasons selon une ou plusieurs des revendications précédentes,
caractérisé en ce qu'une pluralité de systèmes magnétiques sont disposés linéairement en rangée et rassemblés en une barrette de test.
